# EUROPEAN PATENT SPECIFICATION

(11) **EP 3 195 128 B1**
(45) Date of publication and mention of the grant of the patent: **21.10.2020**
(21) Application number: 14901859.0
(22) Date of filing: 15.09.2014
(51) Int. Cl.: G06F 12/00, G06F 9/50, G06F 9/455

(54) **MEMORY MANAGEMENT IN VIRTUALIZED ENVIRONMENT**
SPEICHERVERWALTUNG IN VIRTUALISIERTER UMGEBUNG
GESTION DE LA MÉMOIRE DANS UN ENVIRONMENT VIRTUALISÉ

(43) Date of publication of application: 26.07.2017
(60) Divisional application: 20187926.9
(73) Proprietor: Intel Corporation, Santa Clara, CA 95054 (US)
(72) Inventor: ZHANG, Xiantao, Shanghai 200241 (CN); XU, Dongxiao, Shanghai 200241 (CN)
(74) Representative: Rummler, Felix
(86) International application number: PCT/CN2014/086508
(87) International publication number: WO 2016/041118

(56) References cited:
- WO-A1-2009/033166
- CN-A- 101 158 924
- CN-A- 101 971 146
- CN-A- 103 092 678
- CN-A- 103 430 159
- US-A1- 2012 036 325
- US-A1- 2013 160 011
- US-A1- 2013 339 568

## Description

### Technical Field

The present disclosure relates to the field of computing, in particular, to apparatuses, methods and storage media associated with memory management in virtualized computing.

### Background

The background description provided herein is for the purpose of generally presenting the context of the disclosure. Unless otherwise indicated herein, the materials described in this section are not prior art to the claims in this application and are not admitted to be prior art by inclusion in this section.

In a virtualization environment, when creating a virtual machine (VM), a host system typically allocates enough memory for the VM. Frequently, the allocated memory is not fully used by the VM. Various memory saving technologies have been developed to free unused memory of the VM for allocation to other VMs, to improve overall system memory usage efficiency, and in turn, overall system performance. However, so far there is no efficient method developed for freeing used memory of VM to further improve system memory usage and performance.

US 2013/339568 A1 describes a mechanism for managing memory of a virtual machine having a runtime environment executing therein. The runtime environment includes a balloon agent that allocates memory objects within heap memory of the runtime environment and hints to a hypervisor that machine memory pages backing the memory objects may be candidates for page sharing. At launch of the runtime environment, the balloon agent allocates memory objects in response to detecting a state of high machine memory consumption by the virtual machine. Further, while the runtime environment is running, the balloon agent allocates memory objects within heap memory when the runtime environment becomes idle.

WO 2009/033166 A1 describes a system for changing the memory usage of a virtual machine on request from a hypervisor, comprising: a hypervisor; a guest operating system executing inside the hypervisor; a communication channel between the hypervisor and the guest operating system; a balloon driver in the guest operating system; a virtual machine for executing a software application; a communication channel between the balloon driver and the virtual machine; a memory space or heap for use by the virtual machine in storing software objects and pointers as part of the software application; and a compacting garbage collector for use by the virtual machine.

US 2013/160011 A1 and US 2012/036325 A1 describe systems pertaining to the technological background of the present invention.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure 1 illustrates a hardware/software view of a computing device incorporated with memory management for virtualized computing of the present disclosure, in accordance with various embodiments.
Figure 2 illustrates a process view of a method for managing memory in virtualized computing, in accordance with various embodiments.
Figure 3 illustrates a graphical view of the method for managing memory in virtualized computing, in accordance with various embodiments
Figure 4 illustrates a component view of an example computer system suitable for practicing the disclosure, in accordance with various embodiments.
Figure 5 illustrates an example storage medium with instructions configured to enable a computing device to practice the present disclosure, in accordance with various embodiments.

### Detailed Description

Apparatuses, methods and storage media associated with memory management in virtualized computing are disclosed herein. In embodiments, an apparatus may include a virtual machine manager to manage operations of a plurality of virtual machines, having a memory manager to manage allocation and de-allocation of physical memory to and from the plurality of virtual machines. Allocation and de-allocation may include de-allocation of unused and used physical memory allocated to a first of the plurality of virtual machines to recover physical memory for allocation to one or more other ones of the plurality of virtual machines, and re-allocation of physical memory for the previously de-allocated unused and used physical memory of the first virtual machine. As a result, more virtual machines may be supported for a given amount of physical memory, or less memory may be required to support a given number of virtual machines.

In embodiments, the memory management technology disclosed herein may be employed by a cloud computing server configured to host a number of virtual machines, or by mobile devices configured to operate with multiple operating systems, e.g., an operating system configured to support phone or tablet computing, such as Android™, and another operating system configured to support laptop computing, such as Windows®.

In the following detailed description, reference is made to the accompanying drawings, which form a part hereof, wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense, and the scope of certain embodiments is defined by the appended claims.

Operations of various methods may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiments. Various additional operations may be performed and/or described operations may be omitted, split or combined in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used hereinafter, including the claims, the term "module" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

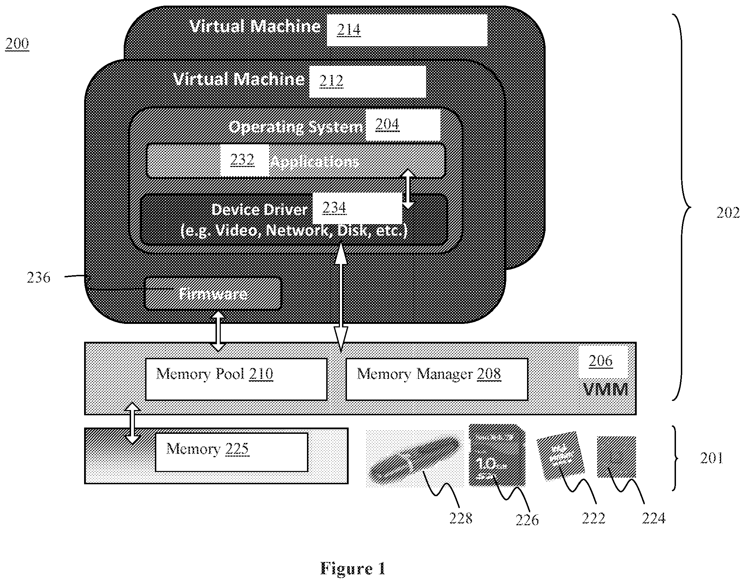

Figure 1 illustrates a software view of a computing device incorporated with memory management for virtualized computing of the present disclosure, in accordance with various embodiments. As shown, computing device 200 may include physical platform hardware 201, which may include, but is not limited to, physical hardware elements such as microprocessors 222, chipsets 224, memory 225, solid-state storage medium 226, input/output devices 228, and so forth. One or more of the microprocessors 222 may be multi-core. Chipsets 224 may include, but are not limited to, memory controllers, and so forth. Memory 225 may include, but is not limited to, dynamic random access memory (DRAM). Solid-state storage medium 226 may include, but is not limited to, storage devices that employ Rapid Storage Technology (RST), available from Intel Corporation of Santa Clara, CA. Input/output devices 228 may include, but are not limited to, keyboard, cursor control device, touch screen, wired and/or wireless communication interfaces.

Software elements 202 may include virtual machine manager (VMM) 206 configured to manage operations of a number of virtual machines, e.g., 212 and 214, hosted by computing device 200. VMM 206 may include memory manager 208 to manage allocation and de-allocation of physical memory 225 to virtual machines 212/214 in support of the virtual memory spaces of virtual machines 212/214. Additionally, memory manager 208 may be configured to manage mapping of the virtual addresses of the virtual memory spaces of virtual machines 212/214 to physical addresses of physical memory 225 to facilitate access of memory locations within memory 225. In embodiments, memory locations of memory 225 may be organized and managed in units of pages, and memory manager 208 may be configured with page tables (not shown) to manage allocation/de-allocation of the resources of memory 225, as well as control access to the allocated resources. Further, memory manager 208 may be configured with memory management techniques that reduce the amount of memory 225 required to support a number of virtual machines 212/214 for a given service level requirement, or support more virtual machines 212/214 at a service level requirement, for a given amount of memory 225, to be further described below.

Each virtual machine 212/214 may include an operating system (OS) 204. OS 204 of each virtual machine 212/214 may be the same or different. Each OS 204 may include firmware 236, device drivers 234 and applications 232. Firmware 236 may be configured to provide basic system input/output services, including, but not limited to, basic services employed for the operation of virtual machine 212/214 prior to the operation of OS 204. Examples of OS 204 may include, but are not limited to, Android™, available from Google, Inc of Mountain View, CA, or Windows®, available from Microsoft Corporation, of Redmond, WA. Examples of device drivers 234 may include, but are not limited to, video drivers, network drivers, disk drivers, and so forth. Examples of applications 232 may include, but are not limited to, web services, Internet portal services, search engines, social networking, news services, games, word processing, spreadsheets, calendars, telephony, imaging, and so forth.

While for ease of understanding, only two virtual machines are illustrated in Figure 1, the present disclosure is not so limited, and it will be apparent to those skilled in the art, from the totality of the description, that the present disclosure may be practiced with computing device 200 hosting any number of two or more virtual machines, limited only by the capacity of the hardware elements and the applications to be executed. At one end, computing device 200 may be a mobile device configured to operate two operating systems. At the other end, computing device 200 may be a high end server in a computing cloud configured to support hundreds or even more virtual machines. Examples of a mobile device configured to operate two operating systems may include, but is not limited to, a mobile device configured to operate with one OS, e.g., Android™, when operating as a computing tablet or mobile phone, or to operate with another OS, e.g., Windows®, when operating as a laptop computer.

Continuing to refer to Figure 1, in embodiments, VMM 206 may be configured to monitor respective state transitions of virtual machines 212/214. For example, VMM 206 may be configured to monitor whether a virtual machine 212/214 is transitioning from an active state, such as a state where at least one application 232 within virtual machine 212/214 is actively executing, to a less active or idle state. What constitutes a less active state may be implementation-dependent, depending on whether the implementation wants to manage the de-allocation/re-allocation aggressively or less aggressively. The least aggressive approach would be to manage the de-allocation/re-allocation based on a virtual machine 212/214 entering or leaving the idle state, i.e., a state wherein applications 232 and OS 204 within virtual machine 212/214 are waiting for work. In embodiments, virtual machine 212/214 may operate in the foreground when it is in an active state, where it is given priority, routed interrupts, and so forth, and may operate in the background when it is in an idle state, where it is not given priority, nor routed interrupts. Virtual machines 212 and 214 may be switched back and forth between foreground and background, depending on activities and/or system events. An example of a system event for a tablet/laptop computer may be the detachment or attachment of the keyboard portion of the tablet/laptop computer from/to the display portion of the tablet/laptop computer.

In embodiments, VMM 206 may be configured to request memory manager 208 to de-allocate unused and used memory of a virtual machine 212/214, in response to a determination that the virtual machine 212/214 is transitioning from an active state to a low activity state or an idle state. Further, VMM 206 may be configured to request memory manager 208 to re-allocate memory to a virtual machine 212/214 to replace the previously de-allocated unused and used memory of a virtual machine 212/214, in response to a determination that the virtual machine 212/214 is transitioning from a low activity or an idle state to an active state.

In embodiments, to facilitate de-allocation of unused memory of a virtual machine 212/214 and re-allocation of memory to replenish previously de-allocated unused memory of the virtual machine 212/214, memory manager 208 may be configured to include an associated driver, and cause the associated driver to be installed in OS 204 of a virtual machine 212/214 (e.g., as one of device drivers 234). In embodiments, the associated driver 234 may be pre-installed in OS 204. In other embodiments, the associated driver 234 may be installed in OS 204 in real time, on instantiation of OS 204. In embodiments, to facilitate de-allocation of used memory of a virtual machine 212/214, and re-allocation of memory for previously de-allocated used memory of the virtual machine 212/214, VMM 206 may be configured to include a memory pool 210. In embodiments, memory pool 210 may be configured as a block device.

In embodiments, VMM 206 may be the first third party driver running from firmware, in particular, firmware configured with Unified Extensible Firmware Interface (UEFI).

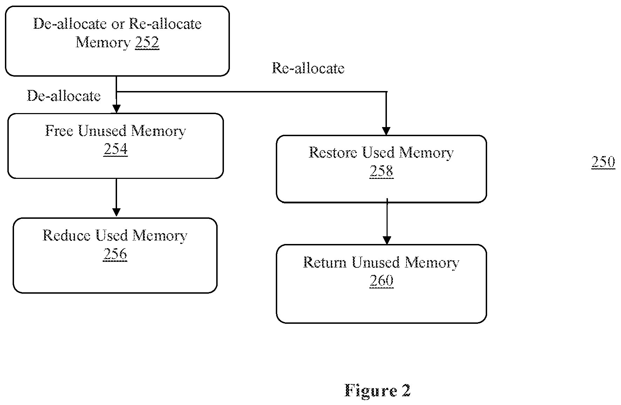

To further describe usage of the associated driver 234 and memory pool 210, refer now also to Figure 2, wherein a process view of the method for managing memory allocation/de-allocation in virtualized computing, in accordance with various embodiments, is shown. As illustrated, process 250 for managing memory allocation/de-allocation in virtualized computing may include operations performed in block 252-260. The operations may be performed, e.g., by memory manager 208 of Figure 1.

Process 250 may start at block 252. At block 252, a determination may be made, e.g., by memory manager 208, on whether a received memory management request is to de-allocate memory allocated to a virtual machine 212/214, or to re-allocate memory to a virtual machine 212/214 for previously de-allocated memory. If the request is to de-allocate memory allocated to a virtual machine 212/214, process 250 may proceed to block 254. On the other hand, if the request is to re-allocate memory to a virtual machine 212/214 for previously de-allocated memory, process 250 may proceed to block 258.

At block 254, the unused memory of the virtual machine 212/214 may be freed, i.e., de-allocated, and made available for allocation to other virtual machines 212/214 hosted by computing device 200. For the earlier described embodiments with memory manager 208 having associated driver 234, as part of the de-allocation process, a request may be made to OS 204, e.g., by memory manager 208, to assign the virtual memory that maps to the unused memory of the virtual machine 212/214 to associated driver 234. On receipt of identifications of the virtual memory of the virtual machine 212/214 having been assigned to driver 234, memory allocation/mapping tables may be updated, to reflect the availability of the recovered memory for allocation to other virtual machines 212/214 hosted by computing device 200. In embodiments, the amount of unused memory freed may vary at the discretion of memory manager 208. In other words, memory manager 208 may ascertain, e.g., through the special driver 234 it caused to be installed, the amount of unused memory available, and request all or a portion to be assigned/freed. From block 254, process 250 may proceed to block 256.

At block 256, the used memory of the virtual machine 212/214 may be partially freed, i.e., partially de-allocated, and made available for allocation to other virtual machines 212/214 hosted by computing device 200. More specifically, as part of the de-allocation process, a portion of memory pool 210 may be allocated to the virtual machine 212/214, to replace (swap for) the used memory of the virtual machine 212/214. Data in the used memory being swapped may be compressed, and copied into the portion of memory pool 210, thereby allowing the used memory of the virtual machine 212/214 to be freed for allocation to other virtual machines 212/214 hosted by computing device 200. Typically, by virtue of compression, the (swap in) area in memory pool 210 will be smaller than the used memory being de-allocated. The amount of reduction may depend on a particular compression technique employed.

From block 256, the process may terminate.

At block 258, the previously partially de-allocated used memory of the virtual machine 212/214 may be replenished. More specifically, as part of the re-allocation process, a new area of memory 225 may be allocated to the virtual machine 212/214 being resumed, to replace (swap for) the used memory of the virtual machine 212/214. Data in the used memory may be decompressed, and copied into the new area of memory 225 being newly allocated to the virtual machine 212/214, thereby restoring the data in the used memory, enabling the virtual machine 212/214 to resume operation. Typically, the new area of memory 225 being allocated (swap in) will be larger than the replaced (swap out) area. From block 258, process 250 may proceed to block 260.

At block 260, the previously de-allocated unused memory of the virtual machine 212/214 may be restored, i.e., re-allocated. For the earlier described embodiments with memory manager 208 having associated driver 234, as part of the re-allocation process, in addition to updating the memory allocation/mapping table, a request may be made to OS 204, e.g., by memory manager 208, to un-assign from associated driver 234 the virtual memory that maps to the unused memory of the virtual machine 212/214, thereby allowing the unused memory of the virtual machine 212/214 to be available for use by applications 232 or OS 204 of the virtual machines 212/214.

From block 260, the process may terminate.

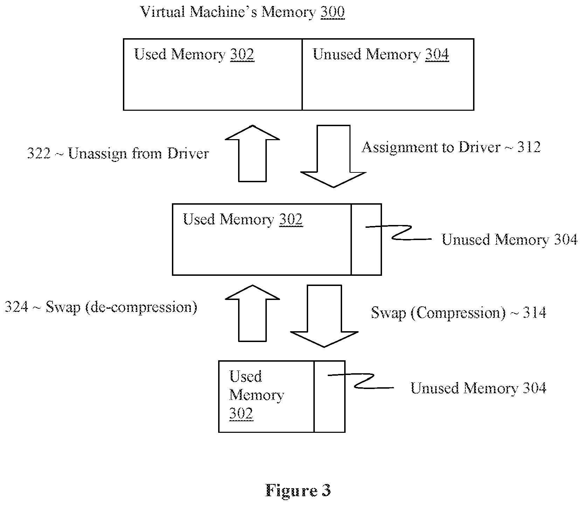

Figure 3 illustrates a graphical view of the memory management technique for virtualized computing, in accordance with various embodiments. As shown in the top portion of Figure 3, and described earlier, at a first state, e.g., an active state, a virtual machine may have memory 300, of which a portion is used, used memory 302, and a portion is unused, unused memory 304. To recover memory from the virtual memory, unused memory 304 is first freed, e.g., via the associated driver assignment technique 312 earlier described. As illustrated in the middle portion of Figure 3, on recovery of the unused memory 304, the total amount of memory allocated to the virtual machine is reduced.

Thereafter, a portion of the used memory 302 is also freed, through, e.g., the earlier described compressed and swap technique 314. As illustrated in the lower portion of Figure 3, on partial recovery of the used memory 302, the total amount of memory allocated to the virtual machine is further reduced.

The process is reversed when the previously de-allocated used and unused memory 302 and 304 are replenished, with the used memory 302 being restored first, followed by the unused memory 304, going from the lower portion of Figure 3 to the top portion of Figure 3.

In an example application of the present disclosure to a dual OS computing device having Android™ and Windows®, potential substantial saving was observed. On initialization, Windows® was created on top of Android™ with 1GB of memory assigned to Windows®, and about 450MB used. When Windows® is not used actively, ∼500MB of the unused memory was first freed and made available to Android™ as earlier described. Thereafter, another ∼300MB of the 450MB used memory may be further freed as earlier described, resulting in almost 800MB of memory being freed for use by Android™ to improve its performance.

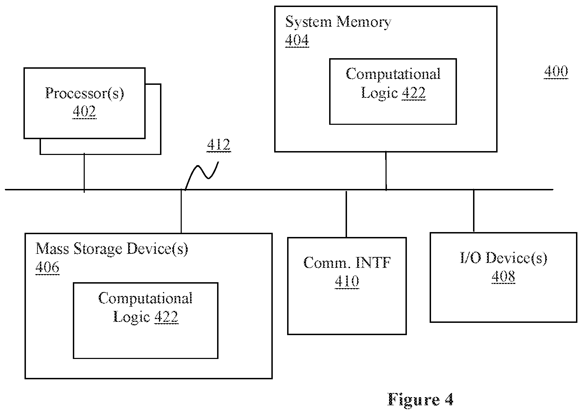

Referring now to Figure 4, wherein an example computer suitable for use for the arrangement of Figure 1, in accordance with various embodiments, is illustrated. As shown, computer 400 may include one or more processors or processor cores 402, and system memory 404. In embodiments, multiples processor cores 402 may be disposed on one die. For the purpose of this application, including the claims, the terms "processor" and "processor cores" may be considered synonymous, unless the context clearly requires otherwise. Additionally, computer 400 may include mass storage device(s) 406 (such as diskette, hard drive, compact disc read only memory (CD-ROM) and so forth), input/output device(s) 408 (such as display, keyboard, cursor control and so forth) and communication interfaces 410 (such as network interface cards, modems and so forth). In embodiments, a display unit may be touch screen sensitive and includes a display screen, one or more processors, storage medium, and communication elements, further it may be removably docked or undocked from a base platform having the keyboard. The elements may be coupled to each other via system bus 412, which may represent one or more buses. In the case of multiple buses, they may be bridged by one or more bus bridges (not shown).

Each of these elements may perform its conventional functions known in the art. In particular, system memory 404 and mass storage device(s) 406 may be employed to store a working copy and a permanent copy of the programming instructions implementing the operations described earlier, e.g., but not limited to, operations associated with VMM 206 (including memory manager 208), denoted as computational logic 422. The various elements may be implemented by assembler instructions supported by processor(s) 402 or high-level languages, such as, for example, C, that can be compiled into such instructions.

The permanent copy of the programming instructions may be placed into permanent mass storage device(s) 406 in the factory, or in the field, through, for example, a distribution medium (not shown), such as a compact disc (CD), or through communication interface 410 (from a distribution server (not shown)). That is, one or more distribution media having an implementation of the agent program may be employed to distribute the agent and program various computing devices.

The number, capability and/or capacity of these elements 410-412 may vary, depending on the intended use of example computer 400, e.g., whether example computer 400 is a smartphone, tablet, ultrabook, laptop or a server. The constitutions of these elements 410-412 are otherwise known, and accordingly will not be further described.

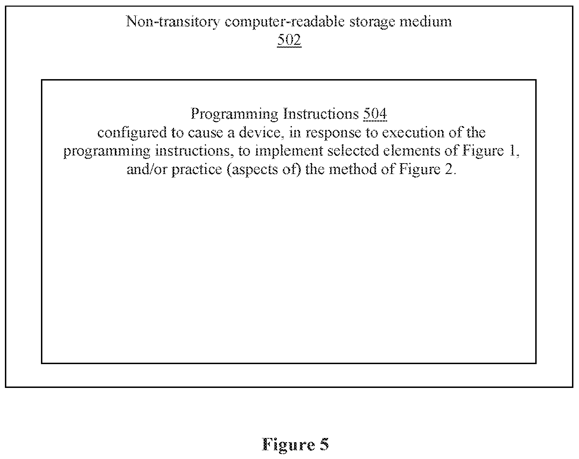

Figure 5 illustrates an example non-transitory computer-readable storage medium having instructions configured to practice all or selected ones of the operations associated with VMM 206 (including memory manager 208), earlier described, in accordance with various embodiments. As illustrated, non-transitory computer-readable storage medium 502 may include a number of programming instructions 504. Programming instructions 504 may be configured to enable a device, e.g., computer 400, in response to execution of the programming instructions, to perform, e.g., various operation associated with VMM 206 (including memory manager 208) of Figure 1 or various operations of method 250 of Figure 2 respectively. In alternate embodiments, programming instructions 504 may be disposed on multiple non-transitory computer-readable storage medium 502 instead. In still other embodiments, programming instructions 504 may be encoded in transitory computer readable signals.

Referring back to Figure 4, for one embodiment, at least one of processors 402 may be packaged together with a memory having computational logic 422 (in lieu of storing in system memory 404 and/or mass storage device 406) configured to practice all or selected ones of the operations associated with VMM 206 (including memory manage 208) of Figure 1, or aspects of process 250 of Figure 2. For one embodiment, at least one of processors 402 may be packaged together with a memory having computational logic 422 to form a System in Package (SiP). For one embodiment, at least one of processors 402 may be integrated on the same die with a memory having computational logic 422. For one embodiment, at least one of processors 402 may be packaged together with a memory having computational logic 422 to form a System on Chip (SoC). For at least one embodiment, the SoC may be utilized in, e.g., but not limited to, a hybrid computing tablet/laptop.

## Claims

1. An apparatus (200) for virtualized computing, comprising:
one or more processors (222);
physical memory (225) coupled with the one or more processors; and
a virtual machine manager (206) to be operated by the one or more processors to manage operations of a plurality of virtual machines (212, 214), having a memory manager (208) to manage allocation and de-allocation of the physical memory to and from the plurality of virtual machines, including
de-allocation (254) of a first portion (304) of the physical memory allocated to a first of the plurality of virtual machines and currently being unused by the first virtual machine;
de-allocation (256) of a second portion (302) of the physical memory allocated to the first of the plurality of virtual machines and currently being used by the first virtual machine;
re-allocation of the de-allocated portions of the physical memory to another virtual machine;
wherein to de-allocate the second portion of the physical memory allocated to and used by the first virtual machine and re-allocate the second portion of the physical memory to the another virtual machine, the virtual machine manager is to compress (314) data in the second portion of the physical memory being deallocated, and
make a copy of the compressed data into a memory pool of the virtual machine manager (206), prior to re-allocation of the second portion of the physical memory to the other virtual machine;
wherein the memory manager (208) is to further re-allocate the previously de-allocated unused and used physical memory to the first virtual machine,
with the second portion (302) being restored first, followed by the first portion (304), in order to replenish the previously de-allocated unused and used physical memory of the first virtual machine;
and wherein the memory manager (208) is to further decompress (324) the compressed data copied into the memory pool, and copy the data after decompression back into physical memory allocated to the first virtual machine as part of the re-allocation of the physical memory for the previously de-allocated unused and used physical memory to the first virtual machine.

2. The apparatus (200) of claim 1, wherein the memory manager (208) is to perform the de-allocation or the re-allocation in response to a request.

3. The apparatus (200) of claim 2, wherein the virtual machine manager (206) is to make the request in response to a determination that the first virtual machine is entering or leaving a particular state.

4. The apparatus (200) of claim 3, wherein the virtual machine manager (206) is to make the request in response to a determination that the first virtual machine is entering, or leaving, an idle or background state.

5. The apparatus (200) of claim 3, wherein virtual machine manager (206) is to further monitor state transitions of the plurality of virtual machines (212, 214).

6. The apparatus (200) of claim 1, wherein the memory manager (208) is to further cause a driver to be installed in an operating system of the first virtual machine, and to request the operating system to assign unused virtual memory addresses of the first virtual machine to the driver as part of the de-allocation of unused physical memory from the first virtual machine.

7. The apparatus (200) of claim 6, wherein the memory manager (208) is to further request the operating system to un-assign the virtual memory addresses of the first virtual machine assigned to the driver as part of the re-allocation of the physical memory for the previously de-allocated unused physical memory of the first virtual machine.

8. The apparatus (200) of any one of claims 1-7, wherein the apparatus is a selected one of a mobile device or a cloud computing server.

9. A method (250) for virtualized computing, comprising:
de-allocating (254) by a computing system, of a first portion (304) of physical memory allocated to a first of a plurality of virtual machines and currently being unused by the first virtual machine
de-allocating (256) by the computing system, a second portion (302) of the physical memory of the computer system allocated to the first of the plurality of virtual machines of the computing system and used by the first virtual machine; and
re-allocating (252), by the computing system, the first and second portions of the physical memory to another virtual machine ;
wherein de-allocating the second portion of the physical memory allocated to and used by the first virtual machine and re-allocating the physical memory to the other virtual machine comprises compressing (314) data in the second portion of the physical memory being deallocated, and making a copy of the compressed data into a memory pool of a virtual machine manager (208) of the computing system prior to re-allocating the second portion of the physical memory to the other virtual machine;
the method further comprising:
re-allocating the previously de-allocated unused and used physical memory to the first virtual machine, with the second portion (302) being restored first, followed by the first portion (304), in order to replenish the previously de-allocated unused and used physical memory of the first virtual machine; and
decompressing (324), by the computing system, the compressed data copied into the memory pool, and copying the data after decompression back into physical memory allocated to the first virtual machine as part of re-allocating the physical memory for the previously de-allocated physical memory of the first virtual machine.

10. The method (250) of claim 9, further comprising monitoring, by the computing system, state transitions of the plurality of virtual machines.

11. The method (250) of claim 9, further comprising a virtual machine manager of the computing system causing driver to be installed in an operating system of the first virtual machine, requesting the operating system to assign virtual memory addresses of the first virtual machine to the driver as part of de-allocating the portion of physical memory from the first virtual machine, and requesting the operating system to un-assign the virtual memory addresses of the first virtual machine assigned to the driver as part of re-allocating the physical memory for the previously de-allocated physical memory of the first virtual machine.

12. The method (250) of any one of claims 9-11, wherein the computing system is a selected one of a mobile device or a cloud computing server.

## Patentansprüche

1. Vorrichtung (200) für virtualisiertes Rechnen, umfassend:
einen oder mehrere Prozessoren (222);
physischen Speicher (225), der an den einen oder die mehreren Prozessoren gekoppelt ist; und
eine Verwaltung für virtuelle Maschinen (206), die von dem einen oder den mehreren Prozessoren zu betreiben ist, um Operationen einer Vielzahl von virtuellen Maschinen (212, 214) zu verwalten, und die eine Speicherverwaltung (208) aufweist, um eine Zuteilung und Freigabe des physischen Speichers zu und von der Vielzahl der virtuellen Maschinen zu verwalten, enthaltend
Freigabe (254) eines ersten Abschnitts (304) des physischen Speichers, der einer ersten der Vielzahl von virtuellen Maschinen zugeteilt ist und derzeit von der ersten virtuellen Maschine nicht verwendet wird;
Freigabe (256) eines zweiten Abschnitts (302) des physischen Speichers, der der ersten der Vielzahl von virtuellen Maschinen zugeteilt ist und derzeit von der ersten virtuellen Maschine verwendet wird;
erneute Zuteilung der freigegebenen Abschnitte des physischen Speichers an eine andere virtuelle Maschine;
wobei die Verwaltung für virtuelle Maschinen, um den zweiten Abschnitt des physischen Speichers, der der ersten virtuellen Maschine zugeteilt ist und von dieser verwendet wird, freizugeben und den zweiten Abschnitt des physischen Speichers der anderen virtuellen Maschine zuzuteilen, Daten im zweiten Abschnitt des physischen Speichers, der freigegeben wird, zu komprimieren hat (314) und eine Kopie der komprimierten Daten in einen Speicherpool der Verwaltung für virtuelle Maschinen (206) zu erstellen hat, vor einer erneuten Zuteilung des zweiten Abschnitts des physischen Speichers zur anderen virtuellen Maschine;
wobei die Speicherverwaltung (208) ferner den vorher freigegebenen, nicht verwendeten und verwendeten physischen Speicher der ersten virtuellen Maschine erneut zuzuteilen hat,
wobei der zweite Abschnitt (302) zuerst wiederhergestellt wird, gefolgt vom ersten Abschnitt (304), um den vorher freigegebenen, nicht verwendeten und verwendeten physischen Speicher der ersten virtuellen Maschine wieder aufzustocken;
und wobei die Speicherverwaltung (208) ferner die komprimierten Daten, die in den Speicherpool kopiert wurden, ferner zu dekomprimieren hat (324) und die Daten nach der Dekomprimierung zurück in physischen Speicher zu kopieren hat, der der ersten virtuellen Maschine als Teil der erneuten Zuteilung des physischen Speichers für den vorher freigegebenen, nicht verwendeten und verwendeten physischen Speicher an die erste virtuelle Maschine zugeteilt wurde.

2. Vorrichtung (200) nach Anspruch 1, wobei die Speicherverwaltung (208) die Freigabe oder die erneute Zuteilung als Reaktion auf eine Anforderung durchzuführen hat.

3. Vorrichtung (200) nach Anspruch 2, wobei die Verwaltung für virtuelle Maschinen (206) die Anforderung als Reaktion auf eine Ermittlung zu stellen hat, dass die erste virtuelle Maschine in einen oder aus einem bestimmten Zustand tritt.

4. Vorrichtung (200) nach Anspruch 3, wobei die Verwaltung für virtuelle Maschinen (206) die Anforderung als Reaktion auf eine Ermittlung zu stellen hat, dass die erste virtuelle Maschine in einen oder aus einem Leerlauf- oder Hintergrundzustand tritt.

5. Vorrichtung (200) nach Anspruch 3, wobei die Verwaltung für virtuelle Maschinen (206) ferner Zustandsübergänge der Vielzahl von virtuellen Maschinen (212, 214) zu überwachen hat.

6. Vorrichtung (200) nach Anspruch 1, wobei die Speicherverwaltung (208) ferner zu veranlassen hat, dass ein Treiber in einem Betriebssystem der ersten virtuellen Maschine installiert wird, und vom Betriebssystem anzufordern hat, dem Treiber nicht verwendete virtuelle Speicheradressen der ersten virtuellen Maschine als Teil der Freigabe von nicht verwendetem physischem Speicher von der ersten virtuellen Maschine zuzuweisen.

7. Vorrichtung (200) nach Anspruch 6, wobei die Speicherverwaltung (208) ferner vom Betriebssystem anzufordern hat, die virtuellen Speicheradressen der ersten virtuellen Maschine freizugeben, die dem Treiber als Teil der erneuten Zuteilung des physischen Speichers für den vorher freigegebenen, nicht verwendeten physischen Speicher der ersten virtuellen Maschine zugewiesen wurden.

8. Vorrichtung (200) nach einem der Ansprüche 1-7, wobei die Vorrichtung eine ausgewählte einer mobilen Einrichtung oder eines Cloudrechenservers ist.

9. Verfahren (250) für virtualisiertes Rechnen, umfassend:
Freigeben (254), durch ein Rechensystem, eines ersten Abschnitts (304) eines physischen Speichers, der einer ersten einer Vielzahl von virtuellen Maschinen zugeteilt ist und derzeit von der ersten virtuellen Maschine nicht verwendet wird;
Freigeben (256), durch das Rechensystem, eines zweiten Abschnitts (302) des physischen Speichers des Computersystems, der der ersten der Vielzahl von virtuellen Maschinen des Rechensystems zugeteilt ist und von der ersten virtuellen Maschine verwendet wird; und
erneutes Zuteilen (252), durch das Rechensystem, des ersten und des zweiten Abschnitts des physischen Speichers zu einer anderen virtuellen Maschine;
wobei das Freigeben des zweiten Abschnitts des physischen Speichers, der der ersten virtuellen Maschine zugeteilt ist und von dieser verwendet wird, und das erneute Zuteilen des physischen Speichers an die andere virtuelle Maschine ein Komprimieren (314) von Daten im zweiten Abschnitt des physischen Speichers, der freigegeben wird, und Erstellen einer Kopie der komprimierten Daten in einen Speicherpool einer Verwaltung für virtuelle Maschinen (208) des Rechensystems vor einem erneuten Zuteilen des zweiten Abschnitts des physischen Speichers an die andere virtuelle Maschine umfasst;
wobei das Verfahren ferner umfasst:
erneutes Zuteilen des vorher freigegebenen, nicht verwendeten und verwendeten physischen Speichers an die erste virtuelle Maschine, wobei der zweite Abschnitt (302) zuerst wiederhergestellt wird, gefolgt vom ersten Abschnitt (304), um den vorher freigegebenen, nicht verwendeten und verwendeten physischen Speicher der ersten virtuellen Maschine wieder aufzustocken; und
Dekomprimieren (324), durch das Rechensystem, der komprimierten Daten, die in den Speicherpool kopiert wurden, und Kopieren der Daten nach der Dekomprimierung zurück in physischen Speicher, der der ersten virtuellen Maschine als Teil der erneuten Zuteilung des physischen Speichers für den vorher freigegebenen physischen Speicher der ersten virtuellen Maschine zugeteilt ist.

10. Verfahren (250) nach Anspruch 9, das ferner ein Überwachen, durch das Rechensystem, von Zustandsübergängen der Vielzahl von virtuellen Maschinen umfasst.

11. Verfahren (250) nach Anspruch 9, ferner umfassend, ein Bewirken durch eine Verwaltung für virtuelle Maschinen des Rechensystems, dass ein Treiber in einem Betriebssystem der ersten virtuellen Maschine installiert wird, Anfordern vom Betriebssystem, dem Treiber virtuelle Speicheradressen der ersten virtuellen Maschine als Teil der Freigabe des Abschnitts von physischem Speicher von der ersten virtuellen Maschine zuzuweisen, und Anfordern vom Betriebssystem, die Zuweisung der virtuellen Speicheradressen der ersten virtuellen Maschine aufzuheben, die dem Treiber als Teil des erneuten Zuteilens des physischen Speichers für den vorher freigegebenen physischen Speicher der ersten virtuellen Maschine zugewiesen wurden.

12. Verfahren (250) nach einem der Ansprüche 9-11, wobei das Rechensystem ein ausgewähltes einer mobilen Einrichtung oder eines Cloudrechenservers ist.

## Revendications

1. Appareil (200) destiné à l'informatique virtualisée, comprenant :
un ou plusieurs processeurs (222) ;
de la mémoire physique (225) couplée aux un ou plusieurs processeurs ; et
un gestionnaire de machine virtuelle (206) à actionner par les un ou plusieurs processeurs pour gérer les opérations d'une pluralité de machines virtuelles (212, 214), comportant un gestionnaire de mémoire (208) pour gérer l'allocation et la désallocation de la mémoire physique à destination et en provenance de la pluralité de machines virtuelles, comprenant
la désallocation (254) d'une première partie (304) de la mémoire physique allouée à une première de la pluralité de machines virtuelles et actuellement non utilisée par la première machine virtuelle ;
la désallocation (256) d'une deuxième partie (302) de la mémoire physique allouée à la première de la pluralité de machines virtuelles et actuellement utilisée par la première machine virtuelle ;
la réallocation des parties désallouées de la mémoire physique à une autre machine virtuelle ;
dans lequel, pour désallouer la deuxième partie de la mémoire physique allouée à, et utilisée par la première machine virtuelle, et pour réallouer la deuxième partie de la mémoire physique à l'autre machine virtuelle, le gestionnaire de machine virtuelle doit comprimer (314) des données dans la deuxième partie de la mémoire physique en cours de désallocation, et réaliser une copie des données comprimées dans un pool de mémoire du gestionnaire de machine virtuelle (206), avant la réallocation de la deuxième partie de la mémoire physique à l'autre machine virtuelle ;
dans lequel le gestionnaire de mémoire (208) doit en outre réallouer la mémoire physique utilisée et non utilisée, précédemment désallouée, à la première machine virtuelle, la deuxième partie (302) étant rétablie en premier, suivie de la première partie (304), afin de reconstituer la mémoire physique utilisée et non utilisée, précédemment désallouée, de la première machine virtuelle ; et
dans lequel le gestionnaire de mémoire (208) doit en outre décomprimer (324) les données comprimées copiées dans le pool de mémoire, et copier les données après la décompression à nouveau dans la mémoire physique allouée à la première machine virtuelle dans le cadre de la réallocation de la mémoire physique pour la mémoire physique utilisée et non utilisée, précédemment désallouée, à la première machine virtuelle.

2. Appareil (200) selon la revendication 1, dans lequel le gestionnaire de mémoire (208) doit effectuer la désallocation ou la réallocation en réponse à une demande.

3. Appareil (200) selon la revendication 2, dans lequel le gestionnaire de machine virtuelle (206) doit formuler la demande en réponse à une détermination que la première machine virtuelle entre ou quitte un état particulier.

4. Appareil (200) selon la revendication 3, dans lequel le gestionnaire de machine virtuelle (206) doit formuler la demande en réponse à une détermination que la première machine virtuelle entre ou quitte un état inoccupé ou d'arrière-plan.

5. Appareil (200) selon la revendication 3, dans lequel le gestionnaire de machine virtuelle (206) doit en outre surveiller les transitions d'état de la pluralité de machines virtuelles (212, 214).

6. Appareil (200) selon la revendication 1, dans lequel le gestionnaire de mémoire (208) doit en outre provoquer l'installation d'un dans un système d'exploitation de la première machine virtuelle, et demander au système d'exploitation d'attribuer au pilote des adresses de mémoire virtuelle non utilisées de la première machine virtuelle, dans le cadre de la désallocation de la mémoire physique non utilisée provenant de la première machine virtuelle.

7. Appareil (200) selon la revendication 6, dans lequel le gestionnaire de mémoire (208) doit en outre demander au système d'exploitation de désattribuer les adresses de mémoire virtuelle de la première machine virtuelle attribuées au pilote dans le cadre de la réallocation de la mémoire physique pour la mémoire physique non utilisée, précédemment désallouée, de la première machine virtuelle.

8. Appareil (200) selon l'une quelconque des revendications 1 à 7, dans lequel l'appareil est un élément sélectionné parmi un dispositif mobile et un serveur d'informatique en nuage.

9. Procédé (250) destiné à l'informatique virtualisée, comprenant les étapes consistant à :
désallouer (254), par un système informatique, une première partie (304) de mémoire physique allouée à une première d'une pluralité de machines virtuelles et actuellement non utilisée par la première machine virtuelle ;
désallouer (256), par le système informatique, une deuxième partie (302) de la mémoire physique du système informatique allouée à la première de la pluralité de machines virtuelles du système informatique et utilisée par la première machine virtuelle ; et
réallouer (252), par le système informatique, les première et deuxième parties de la mémoire physique à une autre machine virtuelle ;
dans lequel la désallocation de la deuxième partie de la mémoire physique allouée à, et utilisée par la première machine virtuelle et la réallocation de la mémoire physique à l'autre machine virtuelle comprend la compression (314) des données dans la deuxième partie de la mémoire physique en cours de désallocation, et la réalisation d'une copie des données comprimées dans un pool de mémoire d'un gestionnaire de machine virtuelle (208) du système informatique avant de réallouer la deuxième partie de la mémoire physique à l'autre machine virtuelle ;
le procédé comprenant en outre les étapes consistant à :
réallouer la mémoire physique utilisée et non utilisée, précédemment désallouée, à la première machine virtuelle, la deuxième partie (302) étant rétablie en premier, suivie de la première partie (304), afin de reconstituer la mémoire physique utilisée et non utilisée, précédemment désallouée, de la première machine virtuelle ; et
décomprimer (324), par le système informatique, les données comprimées copiées dans le pool de mémoire, et copier les données après décompression à nouveau dans la mémoire physique allouée à la première machine virtuelle dans le cadre de la réallocation de la mémoire physique pour la mémoire physique précédemment de-allouée de la première machine virtuelle.

10. Procédé (250) selon la revendication 9, comprenant en outre la surveillance, par le système informatique, des transitions d'état de la pluralité de machines virtuelles.

11. Procédé (250) selon la revendication 9, comprenant en outre un gestionnaire de machine virtuelle du système informatique qui provoque l'installation d'un pilote dans un système d'exploitation de la première machine virtuelle, demande au système d'exploitation d'attribuer au pilote des adresses de mémoire virtuelle de la première machine virtuelle dans le cadre de la désallocation de la partie de mémoire physique provenant de la première machine virtuelle, et demande au système d'exploitation de désattribuer les adresses de mémoire virtuelle de la première machine virtuelle attribuées au pilote dans le cadre de la réallocation de la mémoire physique pour la mémoire physique précédemment désallouée de la première machine virtuelle.

12. Procédé (250) selon l'une quelconque des revendications 9 à 11, dans lequel le système informatique est un élément sélectionné parmi un dispositif mobile et un serveur d'informatique en nuage.
